# EUROPÄISCHE PATENTANMELDUNG

(11) **EP 0 686 666 A1**
(43) Veröffentlichungstag der Anmeldung: **13.12.1995**
(21) Anmeldenummer: 95108167.8
(22) Anmeldetag: 29.05.1995
(51) Int. Cl.: C08L 1/26, C08J 3/05

(54) **Abmischungen von mit Aldehyden reversibel vernetzten Hydrokolloidmischungen und unvernetzten Hydrokolloiden mit verbessertes Dispergierbarkeit**

(30) Priorität: 10.06.1994 DE 4420338
(71) Anmelder: WOLFF WALSRODE AG, D-29655 Walsrode (DE)
(72) Erfinder: Szablikowski, Klaus, Dr., D-29664 Walsrode (DE); Lange, Werner, Dr., D-27374 Visselhövede (DE); Kiesewetter, Rene, Dr., D-29614 Soltau (DE); Reinhardt, Eugen, D-29664 Walsrode (DE)
(74) Vertreter: Braun, Rolf, Dr.

(57) **Zusammenfassung**

Die vorliegende Erfindung betrifft physikalische Abmischungen bestehend aus reversibel vernetzten Hydrokolloidzusammensetzungen und unvernetzten Hydrokolloiden. Unter reversibel vernetzten Hydrokolloidzusammensetzungen werden solche Systeme verstanden, die aus wenigstem einem, höchstens jedoch fünf Hydrokolloiden, wenigstens einem, höchstens aber fünf Polysacchariden, einem Quellmittel und einem Netzmittel bestehen. Unter Hydrokolloid werden veredelte, also chemisch modifizierte Biopolymere, und unter Polysaccharid unveredelte, also chemisch unveränderte Biopolymere verstanden. Ferner betrifft die Erfindung ein Verfahren zu deren Herstellung sowie deren Verwendung als Zusatzstoff für z.B. Bauwerkstoffe, Bohrspülungen, Dispersionsfarbstoffe oder für Klebstoffzubereitungen oder für die Herstellung von Papier (Papiermasse, -leimung, -beschichtung).

## Beschreibung

Die Erfindung betrifft physikalische Abmischungen bestehend aus reversibel vernetzten Hydrokolloidzusammensetzungen und unvernetzten Hydrokolloiden, ein Verfahren zu deren Herstellung sowie deren Verwendung als Zusatzstoff für verschiedene technische Anwendungen. Unter reversibel vernetzten Hydrokolloidzusammensetzungen werden solche Systeme verstanden, die aus mindestens einem, höchstens jedoch fünf Hydrokolloiden und mindestens einem, höchstens jedoch fünf Polysacchariden bestehen, die miteinander vermischt, mit einem Quellmittel, vorzugsweise Wasser, angedickt und mit Vernetzungsreagenzien vorzugsweise Aldehyden, hydrophobiert werden. Unter Hydrokolloiden werden veredelte, das heißt, chemisch modifizierte Biopolymere, unter Polysacchariden, unveredelte, das heißt, chemische unveränderte Biopolymere verstanden. Die erfindungsgemäß beanspruchten Produkte können überall dort Verwendung finden, wo es auf eine klumpenfreie Dispergierkeit oder einen zeitlich verzögerten Viskositätsaufbau von Verdickungsmitteln ankommt. Die Produkte können z.B. als Hilfsstoffe in Bauwerkstoffen (Putzsystem z.B. Dispersionssilikatputzsystem und Fliesenklebern), als Klebstoffe, in Dispersionsfarben, Dispersionssilikatfarben, Bohrspülungen oder für die Herstellung von Papier (Papiermasse, -leimung oder -beschichtung) oder in der pharmazeutischen Industrie (Tablettensprengmittel) usw. eingesetzt werden.

Wasserlösliche Hydrokolloide, insbesondere Celluloseether finden aufgrund ihrer guten Verfügbarkeit, ihres Quell-, Gelbildungs- und Löseverhaltens vielfältige Anwendung als Verdickungs- und Dispergiermittel. Sie dienen darüber hinaus als Trägermaterialien bei der Herstellung von Pharmaka, Nahrungsmitteln und Kosmetika und werden bei der Formulierung von Pflanzenschutzmitteln eingesetzt.

Das Einbringen des normalerweise in trockener Form als Pulver oder Granulat vorliegenden Hydrokolloids in wäßrige Systeme führt jedoch häufig zu einer verstärkten Staubentwicklung und Klumpenbildung und damit verbunden zu unerwünscht langen Auflösungszeiten. Derartige Nachteile bedingen einen hohen Zeitaufwand beim Eintrag der Hydrokolloide, insbesondere Celluloseether, in wäßrige Systeme, wie z.B. bei der Zubereitung von Bauwerkstoffen und Bohrspülungen oder auch bei der Herstellung schnellöslicher Klebstoffe bzw. Kleister zu anwendungstechnischen Problemen führt.

Es ist seit langem bekannt, Hydrokolloide, insbesondere Celluloseether, wie z.B. Carboxymethylcellulose und Methylhydroxyalkylcelluloseether, mit Hilfe von mono-, bi- und polyfunktionellen Verbindungen zu hydrophobieren und reversibel zu vernetzen. Durch Bildung von Ester- oder Acetalstrukturen ist es möglich, Hydrokolloide temporär zu hydrophobieren, um somit ein schnelles und problemloses, das heißt, klumpenfreies Dispergieren in wäßrigen Systemen zu ermöglichen. Bewährte Vernetzungsmittel sind z.B. Säuren und Anhydride (siehe z.B. US 3 272 640, aber auch US 4 521 594), Formaldehyd oder Dialdehyde, wie z.B. Glyoxal (siehe z.B. US 1 142 281, US 2 329 741, US 2 879 268, US 3 072 635, US 3 903 076, DE-A 2 415 556, US 4 373 959).

Während die Verseifung der durch Säuren oder Anhydride hydrophobierten Hydrokolloide den Zusatz von Alkali notwendig macht, ist bei der Vernetzung mit Aldehyden ein Alkalizusatz nicht unbedingt erforderlich.

Eine derart, vorzugsweise mit Aldehyden erfolgte reversible Hydrophobierung, ist zum einen steuerbar durch den Grad der Vernetzung, also die Menge an zugesetztem Vernetzungsreagenz, zum anderen läßt sich die Hydrophobierung durch schrittweise Erhöhung des pH-Wertes gezielt aufheben. Aus ökonomischen und gesundheitlichen Gründen ist jedoch die Menge an einzusetzendem Vernetzungsreagenz möglichst gering zu halten. Die Beschleunigung der Auflösung durch nachträglichen Alkalizusatz ist aus verfahrenstechnischen und wirtschaftlichen Erwägungen als nachteilig anzusehen.

Gegenstand der Erfindung sind physikalische Abmischungen von reversibel vernetzten Hydrokolloidzusammensetzungen mit unvernetzten Hydrokolloiden. Die physikalischen Abmischungen bestehen aus reversibel vernetzten Hydrokolloidzusammensetzungen, die aus wenigstens einem, höchstens jedoch fünf Hydrokolloiden und wenigstens einem, höchstens jedoch fünf Polysacchariden, einem Quellmittel und einem Netzmittel bestehen und Abmischungen mit unvernetzten Hydrokolloiden oder unvernetzten Hydrokolloidmischungen. Unter Hydrokolloid werden chemisch veränderte, veredelte Biopolymere verstanden. Der Begriff Polysaccharid bezeichnet chemisch unveränderte, nach physikalischen Methoden (z.B. Extraktion) aufbereitete, in ihrem ursprünglichen, nativen Zustand belassene Biopolymere.

Gegenstand der vorliegenden Erfindung ist ein gegenüber dem Stand der Technik vor allem ökonomisches, ökologisch unbedenkliches und vereinfachtes Verfahren zur Herstellung einer in Wasser klumpenfrei dispergierbaren, pumpbaren Abmischung von Hydrokolloiden, dadurch gekennzeichnet, daß die Zusammensetzung aus einer reversibel vernetzten Hydrokolloidzusammensetzung, mit einem, höchstens jedoch fünf Hydrokolloiden, vorzugsweise Celluloseethern, mindestens einem, höchstens jedoch fünf Polysacchariden, vorzugsweise Cellulosen, in einer Mischvorrichtung mit einem Quellmittel, insbesondere Wasser, beaufschlagt, mit Netzmitteln, insbesondere Aldehyden, hydrophobiert wird und Abmischungen der so gefertigten, vernetzten Hydrokolloidzusammensetzung mit unvernetzten Hydrokolloiden oder unvernetzten Hydrokolloidmischungen, insbesondere Celluloseethern oder Celluloseetherabmischungen.

Die erfindungsgemäßen Mischungen sind pumpbar und lassen sich klumpenfrei in wäßrigen Systemen dispergieren. Als Netzmittel werden für die Bereitstellung der vernetzten Hydrokolloidzusammensetzungen mono-, bi- und/oder polyfunktionelle Verbindungen, insbesondere Aldehyde, speziell Glyoxal eingesetzt. Die Zugabe des Quellmittels, vorzugsweise Wasser, erfolgt bei der Herstellung der vernetzten Hydrokolloidzusammensetzung und kann sowohl zu einer zuvor hergestellten Mischung bestehend aus Hydrokolloid, also chemisch verändertem, veredeltem Biopolymer, und Polysaccharid, das heißt, chemisch unverändertem, nativen Biopolymer, als auch zu nur einer der beiden Komponenten erfolgen, wobei nach einer Einwirkungszeit die zweite Komponente als vorzugsweise trockene Substanz zugegeben wird. Das Vernetzungsmittel kann allein, mit einem Teil oder der Gesamtmenge an zuzusetzendem Wasser zu der Mischung aus Hydrokolloid und Polysaccharid zugegeben werden. Die so hergestellten Hydrokolloidzusammensetzungen werden anschließend mit unvernetzten Hydrokolloiden oder Hydrokolloidabmischungen zusammengegeben und physikalisch vermischt.

Die Zugabe des unvernetzten Hydrokolloids oder der unvernetzten Hydrokolloidabmischung zu der vernetzten Hydrokolloidzusammensetzung kann vor oder nach der Konfektionierung (Mahlung, Trocknung) der vernetzten Hydrokolloidzusammensetzung erfolgen und ist für das Wesen der Erfindung unerheblich. Ebenso ist die Reihenfolge der Zugabe von unvernetztem Hydrokolloid oder der unvernetzten Hydrokolloidabmischung zu der vernetzten Hydrokolloidzusammensetzung für das Wesen der Erfindung nicht relevant.

Es ist somit möglich, das unvernetzte Hydrokolloid oder ein Teil davon mit der vernetzten Hydrokolloidzusammensetzung vollständig oder teilweise zu vermischen. Umgekehrt kann ebenfalls zunächst die vernetzte Hydrokolloidzusammensetzung bereitgestellt werden und anschließend die Abmischung mit dem unvernetzten Hydrokolloid oder Hydrokolloidmischung erfolgen. Bei der Herstellung der physikalischen Mischung von vernetzter Hydrokolloidzusammensetzung und unvernetztem Hydrokolloid oder unvernetzter Hydrokolloidabmischung können organische oder wäßrig-organische Quellmittel oder Wasser als Quellmittel eingesetzt werden. Vorzugsweise wird jedoch auf den Zusatz von Quellmitteln aus ökonomischen und ökologischen Gründen verzichtet.

Als Abmischungen von vernetzter Hydrokolloidzusammensetzung mit unvernetztem Hydrokolloid oder unvernetzter Hydrokolloidmischung kommen zum Einsatz 0,001 - 99,999 Gew.-%, insbesondere 0,1 - 90 Gew.-%, vorzugsweise 5 - 90 Gew.-% der vernetzten Hydrokolloidzusammensetzung, mit 99,999 - 0,001 Gew.-%, insbesondere 99,9 - 10 Gew.-%, vorzugsweise 95 - 10 Gew.-% des unvernetzten Hydrokolloids bzw. der unvernetzten Hydrokolloidabmischung.

Im Rahmen der vorliegenden Erfindung werden unter Hydrokolloiden chemisch veränderte, veredelte Biopolymere verstanden, die wasserlöslich sind bzw. nach Aufhebung der Vernetzung wasserlöslich werden. Bevorzugte Hydrokolloide sind Polysaccharidether, wie z.B. Celluloseether, Carboxyalkylcellulosen (z.B. Carboxymethylcellulose), Hydroxyalkylcellulosen (z.B. Hydroxyethyl-, Hydroxypropylcellulosen), Carboxyalkylhydroxyalkylcellulosen (wie z.B. Carboxymethylhydroxyethyl-, Carboxymethylhydroxypropylcellulose), Sulfoalkylcellulosederivate (z.B. Sulfoethylcellulose, Sulfopropylcellulose, Methylsulfoethylcellulose, Methylsulfopropylcellulose, Carboxymethylsulfoethylcellulose, Carboxymethylsulfopropylcellulose, Hydroxyethyl-/Hydroxypropylsulfoethylcellulose, Hydroxyethyl-/Hydroxypropylsulfopropylcelluloseether), Alkylcellulosen (z.B. Methylcellulose, Ethylcellulose), Alkylhydroxyalkylcellulose (z.B. Methylhydroxyethylcellulose, Ethylhydroxyethylcellulose, Methylhydroxypropylcellulose, Ethylhydroxypropylcellulose), Alkylencellulosen (wie z.B. Allylcellulose), Alkylenalkylcellulosen (wie z.B. Allylmethylcellulose, Allylethylcellulose), Dialkylminoalkylcellulosen (z.B. Diethylaminoethylcellulose), Dialkylaminoalkylhydroxyalkylcellulosen (wie z.B. Diethylaminoethylhydroxyethylcellulosen) binäre oder ternäre ionische oder nichtionische Celluloseether aus den oben genannten funktionellen Gruppen, natürliche Polysaccharide, wie z.B. Xanthan, Stärken, modifizierte Stärken, wie z.B. oxidierte, hydroxyalkylierte und carboxyalkylierte Stärken, Guar, Johannisbrotkernmehl, Gummi arabicum, Kristallgummi, Traganth, Gummi, Tamarinde, Alginate, Proteine, synthetische Polymere und Polyamide.

Als Hydrokolloide werden bevorzugt Celluloseether wie Methylhydroxyethylcellulose, Methylhydroxypropylcellulose und Carboxymethylcellulose, sowie Stärken, modifizierte Stärken wie z.B. oxidierte, hydroxyalkylierte, insbesondere hydroxyethylierte, hydroxypropylierte und carboxyalkylierte, insbesondere carboxymethylierte Stärken eingesetzt.

Als Polysaccharide werden bevorzugt Cellulosechemiezellstoffe, Linters-, Nadelholz-Sulfit-, Nadelholz-Sulfat- und/oder Laubholzzellstoffe, Lignin, Hemicellulosen, Xanthan, Stärken, Guar, natürliche Gummi, Johannisbrotkernmehl, Traganth, Tamarinde, Alginate, Carraghenane, Pektine und/oder Proteine verwendet.

Der Anteil des Polysaccharids, bezogen auf die Summe der vernetzten Hydrokolloidzusammensetzung beträgt 1 - 95 Gew.-%, insbesondere 5 - 80 Gew.-%. Der Anteil der vernetzten Hydrokolloidzusammensetzung, bezogen auf die Summe aus vernetzter Hydrokolloidzusammensetzung und unvernetztem Hydrokolloid oder unvernetzter Hydrokolloidabmischung beträgt 0,001 - 99,999 Gew.-%, insbesondere 0,1 - 90 Gew.-%, vorzugsweise 5 - 90 Gew.-%. Der Anteil des unvernetzten Hydrokolloids oder der unvernetzten Hydrokolloidabmischung, bezogen auf die Summe aus vernetzter Hydrokolloidzusammensetzung und unvernetztem Hydrokolloid oder unvernetzter Hydrokolloidabmischung beträgt 99,999 - 0,001 Gew.-%, insbesondere 99,9 - 10 Gew.-%, vorzugsweise 95 - 10 Gew.-%.

Als unvernetzte Hydrokolloide kommen, insbesondere Celluloseether wie Methylhydroxyethylcellulose, Methylhydroxypropylcellulose, Carboxymethylcellulose oder Stärken, modifizierte Stärken, wie z.B. oxidierte, hydroxyalkylierte oder carboxyalkylierte Stärken oder physikalische Abmischungen hierausvon zwei bis maximal fünf Hydrokolloiden zum Einsatz. Werden Abmischungen verschiedener Hydrokolloide eingesetzt, ist der jeweilige Anteil des zum Einsatz gelangten Hydrokolloids in der Abmischung von ökonomischen und anwendungstechnischen Notwendigkeiten abhängig und kann daher wahlweise variiert werden, ohne daß dabei das Wesen der Erfindung verändert wird. Das Verfahren zur Bereitstellung der unvernetzten Hydrokolloidabmischungen sowie die Anteile der jeweiligen in der vernetzten Hydrokolloidabmischung eingesetzten Hydrokolloide ist für das Wesen der Erfindung unerheblich.

Für die Herstellung der vernetzten Hydrokolloidzusammensetzung werden Hydrokolloid und Zellstoff nach den in der Literatur bekannten Methoden mit Dialdehyden, vorzugsweise mit Glyoxal vernetzt.

Unter Quellmittel werden derartige Verbindungen verstanden, die zu einer Quellung des Hydrokolloids, insbesondere Celluloseethers führen. Als Quellmittel werden wäßrige Systeme, vorzugsweise Wasser oder wäßrig-alkoholische Lösungen verwendet. Das Quellmittel wird bevorzugt in einer Menge von 10 - 80 Gew.-%, besonders bevorzugt in einer Menge von 15 - 60 Gew.-% eingesetzt, bezogen auf die gesamte Menge von in der Mischung der vernetzten Hydrokolloidzusammensetzung vorliegendem Hydrokolloid, Polysaccharid, Netzmittel und Quellmittel.

Für eine homogene und intensive Vermischung der vernetzten Hydrokolloidzusammensetzung bestehend aus Hydrokolloid, Polysaccharid, Quellmittel und Vernetzungsreagenz sowie deren physikalische Abmischung mit dem unvernetzten Hydrokolloid oder der unvernetzten Hydrokolloidabmischung muß für eine gute Durchmischung gesorgt werden. Die Art der Durchmischung bzw. die Art des Mischaggregates ist für die Erfindung unerheblich. Geeignete Mischaggregate sind geschlossene Mischbehälter mit bewegten Teilen, kontinuierliche Durchlaufmischaggregate, pneumatische Fließbettmischer, rotierende Mischbehälter oder Mischer mit rotierenden Mischwerkzeugen u.a. Zur Vermeidung von Agglomerationen oder Entmischungen, ist es ferner möglich, den Mischvorgang mit einem Mahlvorgang zu verbinden, Vormischungen herzustellen oder die Homogenisierung durch die Benetzbarkeit mit Zusatzstoffen wie z.B. Tensiden oder Wasser zu verbessern. Geeignete Apparaturen hierzu sind z.B. Kneter, Feuchtgutmischer, Granuliertrommeln, Pelletierteller oder -trommeln.

Die nach der vorliegenden Erfindung beanspruchte, oben bezeichnete physikalische Abmischung kann in üblicher und bekannter Weise konfektioniert, das heißt, getrocknet und gemahlen werden. Vorzugsweise wird auf eine Trocknung und Mahlung verzichtet.

Die Verweilzeit in dem Mischungsaggregat ist unter anderem abhängig von den Knetkräften, die in der verwendeten Rezeptur herrschen. Bevorzugt ist eine Zeit von 15 - 120 min, insbesondere 30 - 80 min.

Mit Hilfe des beschriebenen Verfahrens lassen sich Abmischungen aus vernetzten Hydrokolloidzusammensetzungen mit unvernetzten Hydrokolloiden oder Hydrokolloidabmischungen herstellen. Somit sind beispielsweise physikalische Abmischungen von z.B. 33 Teilen vernetzter Hydrokolloidabmischung, bestehend aus z.B. 50 Teilen Carboxymethylcellulose und 50 Teilen Holzzellstoff und einem Vernetzungsmittel, mit 33 Teilen vernetzter Hydrokolloidabmischung, bestehend aus z.B. 50 Teilen Methylhydroxypropylcellulose und 50 Teilen Holzzellstoff und einem Vernetzungsmittel herstellbar, wobei diese physikalische Abmischung nachfolgend mit z.B. 33 Teilen unvernetztem Hydrokolloid oder unvernetzter Hydrokolloid oder unvernetzter Hydrokolloidabmischung, bestehend aus z.B. Carboxymethylcellulose oder Stärke oder Abmischungen aus beiden Komponenten abgemischt wird.

Das erfindungsgemäße Verfahren ist einfach umsetzbar, kommt mit geringen Mengen an Vernetzungsmitteln aus und verwendet mit Wasser ein toxikologisch unbedenkliches Quellmittel. Durch die Verwendung von Aldehyden bei der Herstellung der vernetzten Hydrokolloidzusammensetzung ist die Aufhebung der Vernetzung auch ohne Zugabe von basischen Substanzen möglich. Durch die Bereitstellung physikalischer Mischungen von vernetzten Hydrokolloidzusammensetzungen und unvernetzten Hydrokolloiden oder Hydrokolloidabmischungen ist es möglich, ein besonders umweltfreundliches und ökonomisches Produkt bereitzustellen sowie ein kostengünstiges Verfahren zu dessen Herstellung aufzuzeigen.

Die nach dem erfindungsgemäßen Verfahren hergestellten Abmischungen von vernetzten Hydrokolloidzusammensetzungen mit unvernetzten Hydrokolloiden oder Hydrokolloidabmischungen können zusätzlich nach dem Stand der Technik übliche Hilfsstoffe, insbesondere Füllstoffe, Kunststoffdispersionspulver, Konservierungsmittel, Entschäumer und Luftporenbildner, Netzmittel und Stabilisatoren und ähnliches enthalten. Derartige Hilfsstoffe werden vorzugsweise in Mengen von maximal 50 %, insbesondere bis zu 10 % eingesetzt, ohne dabei das Wesen der Erfindung zu verändern. Die erfindungsgemäßen Abmischungen finden überall dort Verwendung, wo es auf eine klumpenfreie Dispergierbarkeit oder einen zeitlich verzögerten Viskositätsaufbau von Verdickungsmitteln ankommt. Die Abmischungen finden z.B. Verwendung in Bauwerkstoffen (Putzsysteme, Dispersionssilikatputzsysteme und Fliesenkleber), als Kleisterzubereitungen, in Dispersionsfarben, Dispersionssilikatfarben, bei der Papierverarbeitung (Papiermasse, -leimung, -beschichtung) und in der keramischen Industrie. Sie sind ferner als Verdicker oder Prozeßhilfsmittel in der chemischen, pharmazeutischen Industrie (z.B. als Tablettensprengmittel) und der Bohrindustrie einsetzbar.

Die in den nachfolgend aufgeführten Beispielen bezeichnete Carboxymethylcellulose (CMC) ist wie folgt charakterisiert:

### Handelsübliche Carboxymethylcellulose vom Typ Walocel C^{(R)} mit folgenden Kenndaten:

- Substitutionsgrad:: DS = 0,65 bis 9,95
- Viskosität:: 9 000 bis 12 000 mPa·s (2gew.-%ige Lösung, Schergefälle D = 2,5 s⁻¹, T = 20 °C [Rotationsviskosimeter der Firma Haake]).

Als Verzögerungsgemisch wird eine 50 %ige wäßrige Lösung von Glyoxal mit Mononatriumphosphat eingesetzt (Einsatzmenge: 1 kg Mononatriumphosphat auf 6 l 50 %ige Lösung von Glyoxal).

Zur Überprüfung der Verzögerungswirkung wird das zu prüfende Produkt unter definierten Bedingungen in einem definierten Ansatzverhältnis in das Lösewasser eingerührt. Sofort nach dieser Prozedur wird die relative Viskosität der entstandenen Suspension kontinuierlich mit einem Visko-Tester bis zu einem Anzeigewert von 5 Skalenteilen gemessen. Der Zeitraum vom Zeitpunkt des Einrührens des Anzeigewertes von 5 Skalenteilen wird mit einer Stoppuhr gemessen und als Anfangsviskosität in Sekunden ausgewiesen.

Im einzelnen wird hierbei wie folgt vorgegangen:

Zu 735 g eines auf einen pH-Wert von 7,0 eingestellten Lösewassers werden 15 g des zu prüfenden Produktes innerhalb von 5 sec verlustfrei unter kontinuierlichem Rühren quantitativ eingegeben. Anschließend wird 5 sec weitergerührt. Nach Ablauf der angegebenen Probenvorbereitungszeit wird sofort kontinuierlich die relative Viskosität mit einem Visko-Tester (Visko-Tester VT 181, Meßsystem RS [Firma Haake]) bei der Umdrehungszahl der Stufe 1 gemessen. Bei Erreichen eines Skalenwertes von 5 Skalenteilen wird die Zeit gestoppt.

### Beispiele

### Beispiel 1 (Erfindung)

Zu 800 g eines handelsüblichen CMC-Granulates werden 200 g eines fein gemahlenen Holzzellstoffes hinzugegeben und das Gemisch 30 min in einem Feuchtgutmischer intensiv miteinander vermischt. 500 g der so hergestellten Mischung werden in einen Kneter eingegeben. Bei laufendem Knetwerk werden 250 g Wasser und 7 g eines Verzögerungsgemisches oben genannter Zusammensetzung auf das Gemisch von CMC-Granulat und Holzzellstoff aufgedüst. Das Gemenge wird über einen Zeitraum von 45 min intensiv verknetet und anschließend bei 50 °C getrocknet. Die Restfeuchte liegt bei 6 - 8 %. Das Produktgemisch wird gemahlen (Sieblinie 100 % < 1 000 µm, 70 % < 600 µm) 200 g der so hergestellten vernetzten Hydrokolloidmischung werden mit 800 g des oben bezeichneten unvernetzten CMC-Granulates in einem Nautamischer 1 h durchmischt. Die Restfeuchte liegt anschließend bei 7 %. Das Produktgemisch läßt sich klumpenfrei in Wasser dispergieren.

Die nach dem oben genannten Verfahren ermittelte Anfangsviskosität wird nach 146 sec erreicht. Nach 8 min werden 30 % der Endviskosität erhalten. Die Endviskosität von 9 999 mPa·s erhält man nach 25 min; der pH-Wert der Lösung liegt bei 6,8. Wird die Menge an Verzögerungsgemisch von 7 g auf 21 g erhöht, wird die Anfangsviskosität nach 6 min erreicht.

### Beispiel 2 (Vergleich)

Zu 800 g eines handelsüblichen CMC-Granulates werden 200 g eines fein gemahlenen Holzzellstoffes hinzugegeben und das Gemisch 30 min in einem Feuchtgutmischer intensiv miteinander vermischt. 500 g der so hergestellten Mischung werden in einen Kneter eingegeben. Bei laufendem Knetwerk werden 250 g Wasser und 7 g eines Verzögerungsgemisches oben genannter Zusammensetzung auf das Gemisch von CMC-Granulat und Holzzellstoff aufgedüst. Das Gemenge wird über einen Zeitraum von 45 min intensiv verknetet und anschließend bei 50 °C getrocknet. Die Restfeuchte des Produktgemisches liegt bei 6 bis 8 %. Das gemahlene Produktgemisch besitzt eine Sieblinie von 100 % < 1 000 µm und 70 % < 600 µm und läßt sich klumpenfrei in Wasser dispergieren.

Die nach dem oben genannten Verfahren ermittelte Anfangsviskosität wird nach 240 sec erreicht. Nach 8 min werden 30 % der Endviskosität erhalten. Die Endviskosität von 6 300 mPa·s erhält man nach 25 min, der pH-Wert der Lösung liegt bei 6,8. Wird die Menge an Verzögerungsgemisch von 7 g auf 21 g erhöht, wird die Anfangsviskosität nach 25 min erreicht.

### Beispiel 3 (Vergleich)

Dieselbe Celluloseethermischung wie in Beispiel 2 wird in einem Kneter mit 250 g Wasser, aber diesmal ohne das Verzögerungsgemisch, bei laufendem Knetwerk bedüst und nachfolgend 45 min verknetet. Eine in Wasser gegebene Probe des getrockneten und gemahlenen Produktes führt zur Verklumpung (pH-Wert der Lösung: 7,4). Die Viskosität der Lösung konnte daher nicht ermittelt werden.

### Beispiel 4 (Vergleich)

400 g des in Beispiel 2 bezeichneten CMC-Granulates werden ohne Zusatz des Holzzellstoffes in einen Kneter eingegeben. Bei laufendem Knetwerk wird die CMC mit 250 g Wasser und 7 g Verzögerungsgemisch bedüst. Das Produkt wird 45 min lang verknetet und durch anschließende Trocknung auf eine Restfeuchte von 6 - 8,0 % gebracht. Nach Mahlung hat die CMC eine Sieblinie von 100 % < 1 000 µm und 70 % < 600 µm. Das Produkt läßt sich klumpenfrei in Wasser dispergieren (pH-Wert: 7,2). Die nach dem oben genannten Verfahren ermittelte Anfangsviskosität wird nach 110 sec erreicht. Nach 25 min hat sich die Endviskosität von 10 200 mPa·s eingestellt.

Wird die Menge an Verzögerungsgemisch von 7 g auf 21 g erhöht, wird die Anfangsviskosität nach 8 min erreicht. Um Verzögerungen einzustellen, die den in Beispiel 1 und 2 aufgeführten Angaben entsprechen, sind damit, bezogen auf die Gesamtmenge des zum Einsatz gelangten Materials, deutlich höhere Mengen an Verzögerungsgemisch notwendig.

Die genannten Beispiele zeigen, daß sich lediglich durch Abmischen von Hydrokolloiden (z.B. CMC) mit Polysacchariden (z.B. Holzzellstoffen), bei gleicher Menge an Quell- bzw. Netzmittel, längere Verzögerungen (dargestellt als Anfangsviskosität) einstellen lassen, ohne daß dabei die Menge an Netzmittel erhöht werden muß. Gegenüber dem Stand der Technik (Beispiel 4) sind klumpenfrei dispergierbare Produkte mit gegenüber dem Stand der Technik längerer Verzögerung bei gleichen oder verringerten Zeiten für das Erreichen der Endviskosität und bei vermindertem Einsatz an Netzmittel nur dann zu erhalten, wenn physikalische Abmischungen von vernetzten Hydrokolloidzusammensetzungen mit unvernetzten Hydrokolloiden zum Einsatz kommen. Neben ökologischen Produktvorteilen führt der Einsatz der erfindungsgemäß vernetzten Hydrokolloidmischungen darüber hinaus zu wirtschaftlichen Vorteilen, da durch deren Einsatz die Menge an veredeltem Biopolymer in der Mischung reduziert werden kann, ohne daß damit eine Verschlechterung der Produktqualität einhergeht.

## Patentansprüche

1. Physikalische Abmischungen von mit Aldehyden reversibel vernetzten Hydrokolloidzusammensetzungen und unvernetzten Hydrokolloiden oder unvernetzten Hydrokolloidabmischungen mit verbesserter Dispergierbarkeit, dadurch gekennzeichnet, daß die vernetzte Hydrokolloidzusammensetzung aus wenigstens einem, höchstens aber fünf Hydrokolloiden, also chemisch veränderten, veredelten Biopolymeren und wenigstens einem, höchstens aber fünf Polysacchariden, also chemisch unveränderten, nativen Biopolymeren, einen Quellmittel und einem Netzmittel besteht, und daß als unvernetztes Hydrokolloid oder unvernetzte Hydrokolloidabmischung, chemisch veränderte, veredelte Biopolymere eingesetzt werden.

2. Physikalische Abmischungen nach Anspruch 1, dadurch gekennzeichnet, daß unter Hydrokolloid oder Hydrokolloidabmischung wasserlösliche Celluloseether, Cellulosemischether, Stärkeether und Stärkemischether sowie physikalische Mischungen hiervon, und unter Polysaccharid Cellulosen, Hemicellulosen, Lignin, Xanthan, Stärken und Proteine verstanden werden.

3. Physikalische Abmischungen nach Anspruch 1 oder 2, dadurch gekennzeichnet, daß unter Hydrokolloid oder Hydrokolloidabmischung Methylhydroxyethylcelluloseether, Methylhydroxypropylcelluloseether, Ethylcelluloseether, Hydroxyethylcelluloseether, Hydroxypropylcelluloseether und Carboxymethylcelluloseether sowie physikalische Abmischungen hiervon und unter Polysaccharid Cellulosen, Hemicellulosen, Lignin und Stärken verstanden werden.

4. Verfahren zur Herstellung einer in Wasser klumpenfrei dispergierbaren, pumpbaren, physikalischen Mischung von Hydrokolloiden gemäß Ansprüchen 1 bis 3, dadurch gekennzeichnet, daß die vernetzte Hydrokolloidzusammensetzung aus wenigstens einem, höchstens aber fünf Hydrokolloiden, insbesondere Celluloseethern, Stärke oder Stärkeethern, mindestens einem, höchstens aber fünf Polysacchariden, insbesondere Cellulose, in einer Mischvorrichtung mit einem Quellmittel beaufschlagt und einem Netzmittel hydrophobiert wird und die so hergestellte, vernetzte Hydrokolloidzusammensetzung physikalisch mit einem unvernetzten Hydrokolloid oder einer unvernetzten Hydrokolloidabmischung vermischt wird.

5. Verfahren gemäß Ansprüchen 1 bis 4, dadurch gekennzeichnet, daß bei der Herstellung der unvernetzten Hydrokolloidzusammensetzung wenigstens eine Komponente mit einem Quellmittel beaufschlagt wird, wobei das Quellmittel, nachdem die Komponenten miteinander vermischt und mit einem Netzmittel reversibel hydrophobiert wurden, gegebenenfalls anschließend wieder abgezogen wird.

6. Verfahren gemäß Ansprüchen 1 bis 5, dadurch gekennzeichnet, daß als Hydrokolloide veredelte, also chemisch veränderte Polysaccharide, insbesondere Celluloseether, Stärken, modifizierte Stärken, wie z.B. hydroxyalkylierte, carboxyalkylierte oder oxidierte Stärken verwendet werden.

7. Verfahren nach einem der Ansprüche 1 bis 6, dadurch gekennzeichnet, daß als Polysaccharide unveredelte, das heißt, native, also höchstens physikalisch behandelte Biopolymere, insbesondere Cellulosechemiezellstoffe, Linters-, Nadelholz-Sulfit-, Nadelholz-Sulfat- und/oder Laubholzzellstoffe, Hemicellulosen, Lignin oder Stärken eingesetzt werden.

8. Verfahren nach einem der Ansprüche 1 bis 7, dadurch gekennzeichnet, daß als Quellmittel bei der Herstellung der vernetzten Hydrokolloidzusammensetzung organische Lösungsmittel, insbesondere wäßrig-organische Lösungsmittel, wie wäßrig-alkoholische Lösungen, insbesondere Wasser als Quellmittel eingesetzt werden.

9. Verfahren nach einem der Ansprüche 1 bis 8, dadurch gekennzeichnet, daß als Hydrokolloid Methylhydroxyethylcellulose, Methylhydroxypropylcellulose, Carboxymethylcellulose oder dessen Alkali-, insbesondere Natriumsalz, Stärke, Hydroxyalkylstärke, insbesondere Hydroxypropylstärke, oxidierte Stärke oder Carboxymethylstärke verwendet wird.

10. Verfahren nach einem der Ansprüche 1 bis 9, dadurch gekennzeichnet, daß für die Bereitstellung der erfindungsgemäß beanspruchten Abmischung von Hydrokolloiden bestehend aus vernetzter Hydrokolloidzusammensetzung und unvernetztem Hydrokolloid oder unvernetzter Hydrokolloidabmischung, 0,001 bis 99,999 Gew.-%, insbesondere 0,1 bis 90 Gew.-%, vorzugsweise 5 - 90 Gew.-% an vernetzter Hydrokolloidzusammensetzung und 99,999 bis 0,001 Gew.-%, insbesondere 99,9 bis 10 Gew.-%, vorzugsweise 95 - 10 Gew.-% unvernetzte Hydrokolloide oder unvernetzte Hydrokolloidabmischungen verwendet werden.

11. Verwendung der erfindungsgemäß beanspruchten Abmischung von Hydrokolloidzusammensetzungen nach Anspruch 1 bis 10, dadurch gekennzeichnet, daß die Produkte überall dort Verwendung finden, wo es auf eine klumpenfreie Dispergierbarkeit oder einen zeitlich verzögerten Viskositätsaufbau von Verdickungsmitteln ankommt. Die Produkte sind z.B. in Bauwerkstoffen (z.B. Putzsystemen, Dispersionssilikatputzen, Fliesenklebern) und Bohrspülungen, als Klebstoffe, in der keramischen Industrie, bei der Papierverarbeitung, insbesondere Papiermasse, -leimung und -beschichtung, in Dispersionsfarben, Dispersionssilikatfarben, sowie als Verdicker oder Prozeßhilfsmittel in der chemischen und pharmazeutischen Chemie einsetzbar.
